# EUROPEAN PATENT APPLICATION

(11) **EP 4 550 512 A1**
(43) Date of publication of application: **07.05.2025**
(21) Application number: 23880120.3
(22) Date of filing: 13.10.2023
(51) Int. Cl.: H01M 10/0585, H01M 4/134, H01M 10/052

(54) **METHOD FOR MANUFACTURING ELECTRODE ASSEMBLY WITH IMPROVED PROCESSABILITY, AND ELECTRODE ASSEMBLY MANUFACTURED USING SAME**

(30) Priority: 19.10.2022 KR 20220135189
(71) Applicant: LG Energy Solution, Ltd., Seoul 07335 (KR)
(72) Inventor: LIM, Hunhee, Daejeon 34122 (KR)
(74) Representative: Hoffmann Eitle
(86) International application number: PCT/KR2023/015784
(87) International publication number: WO 2024/085542

(57) **Abstract**

A method of manufacturing an electrode assembly according to an embodiment of the present disclosure includes: unwinding a positive electrode sheet, a separator sheet and an negative electrode sheet from a plurality of roll members, respectively, forming a laminate while passing the unwound positive electrode sheet, separator sheet, and negative electrode sheet between a pair of guide rolls, and punching the laminate including the positive electrode sheet, the separator sheet, and the negative electrode sheet, wherein each of the positive electrode sheet and the negative electrode sheet is alternately coated with an active material and a non-conductive material based on the traveling direction of the guide rolls, and wherein the punching the laminate punches a portion coated with the non-conductive material.

## Description

### [TECHNICAL FIELD]

### Cross Citation with Related Application(s)

This application claims the benefit of Korean Patent Application No. 10-2022-0135189 filed on October 19, 2022 with the Korean Intellectual Property Office, the disclosure of which is incorporated herein by reference in its entirety.

The present disclosure relates to a method of manufacturing an electrode assembly and an electrode assembly manufactured by using the same, and more particularly, to a method of manufacturing an electrode assembly having improved processability and an electrode assembly manufactured by using the same.

### [BACKGROUND]

As the technology development of and the demand for mobile devices have increased, the demand for secondary batteries as energy sources has been rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

Research into lithium secondary batteries having high energy density and discharge voltage is actively underway, and some commercialization stages are in progress.

Such a lithium secondary battery is manufactured by embedding an electrode assembly together with an electrolyte in a battery case, wherein the electrode assembly is obtained by coating a positive electrode or an negative electrode active material, a binder and a conductive material on a current collector in the form of a slurry and drying them to form an electrode mixture layer, thereby manufacturing a positive electrode and an negative electrode, interposing a separator between the positive electrode and the negative electrode, and then laminating them.

A stacked/folded type electrode assembly, which is configured to have a structure in which full cells having a positive electrode/separator/negative electrode structure of a certain unit size or bi-cells having a positive electrode(negative electrode)/separator/negative electrode(positive electrode)/separator/positive electrode(negative electrode) structure are folded using a long continuous separator film, has been developed as an electrode assembly having an advanced structure that is a combination of a jelly-roll type and a stack type.

In addition, a laminated and stacked type electrode assembly, which is configured to have a structure in which unit cells in which electrodes and separators are alternately laminated and joined has also been developed in order to improve processability of a conventional stacked type electrode assembly and to satisfy demand for various kinds of secondary batteries.

When manufacturing a stacked type electrode assembly, it is generally manufactured by a lamination method in which a positive electrode, a separator and an negative electrode are respectively produced in separate processes, then laminated and joined by applying heat and pressure at the same time. At this time, a punching process may be performed to realize the shape of the electrode assembly before joining the electrode and the separator by the lamination method. In the punching process, the positive electrode and the negative electrode are individually punched, and then laminated together with a separator to manufacture a stacked type electrode assembly by a lamination method.

However, if a stacked type electrode assembly is manufactured by punching electrodes individually and then laminating them, there is a problem that the assembly process time becomes longer and the costs increase.

Further, in order to prevent the separator from shrinking due to heat in the electrode assembly and causing a short circuit due to contact between the positive electrode and the negative electrode, the separator may be cut in a larger quantity than the positive electrode and negative electrode during the punching process and then laminated, but if that is the case, the production unit costs may increase because the separator is cut in a larger quantity than needed.

### [DETAILED DESCRIPTION OF THE INVENTION]

### [Technical Problem]

It is an object of the present disclosure to provide a method of manufacturing an electrode assembly that reduces the complexity of the punching and lamination process and thus increases processability, and an electrode assembly manufactured by using the same.

It is another object of the present disclosure to provide a method of manufacturing an electrode assembly that can prevent the occurrence of short circuits during the punching process and thus improve product quality, and an electrode assembly manufactured by using the same.

It is yet another object of the present disclosure to provide a method of manufacturing an electrode assembly that accurately sets the punching position during the process and thus increases production yield, and an electrode assembly manufactured by using the same.

The objects of the present disclosure are not limited to the foregoing objects, and any other objects and advantages not mentioned herein should be clearly understood by those skilled in the art from the following description and the accompanying drawing.

### [Technical Solution]

According to an embodiment of the present disclosure, there is be provided a method of manufacturing an electrode assembly, the method comprising the steps of: unwinding a positive electrode sheet, a separator sheet and an negative electrode sheet from a plurality of roll members, respectively, forming a laminate while passing the unwound positive electrode sheet, separator sheet, and negative electrode sheet between a pair of guide rolls, and punching the laminate including the positive electrode sheet, the separator sheet, and the negative electrode sheet, wherein each of the positive electrode sheet and the negative electrode sheet is alternately coated with an active material and a non-conductive material based on a traveling direction of the guide rolls, and wherein the punching the laminate punches a portion coated with the non-conductive material.

The step of punching the laminate may punch the positive electrode sheet, the separator sheet, and the negative electrode sheet at the same time.

The negative electrode sheet may be formed to include lithium metal.

A marker part for guiding a punching position of the laminate may be formed in a portion coated with the non-conductive material.

The marker part may be formed on the same line as the line on which the non-conductive material is coated during the process of coating the non-conductive material.

The non-conductive material may include a polymer material.

The polymer material used may be PE (polyethylene) series.

The step of alternately coating the active material and the non-conductive material onto each of the positive electrode sheet and the negative electrode sheet may be performed before unwinding a positive electrode sheet and an negative electrode sheet from the roll members.

The step of passing through the guide roll to form the laminate may be performed immediately after the unwinding the positive electrode sheet, the separator sheet, and the negative electrode sheet from the plurality of roll members, respectively.

The step of punching the laminate uses a cutting member, wherein the non-conductive material is formed of a material having ductility to ensure that an electrode material does not adhere to the cutting member.

The cutting member may directly cut the positive electrode sheet, the separator, and the negative electrode sheet.

The direction in which the laminate is punched may be perpendicular to the traveling direction of the guide rolls.

According to another embodiment of the present disclosure, there is be provided an electrode assembly manufactured by the method of manufacturing the electrode assembly described above, the electrode assembly includes a positive electrode, a separator, and an negative electrode formed after the laminate is punched, and the positive electrode and the negative electrode each include an active material layer and a non-conductive layer located on both sides of the active material layer.

The widths of each of the positive electrode, the separator, and the negative electrode may be equal to each other based on a direction that is perpendicular to a direction in which an electrode tab of the positive electrode or the negative electrode protrudes and is perpendicular to the preset direction.

The widths of the positive electrode active material layer and the negative electrode active material layer included respectively in the positive electrode and the negative electrode may be equal to each other based on a direction perpendicular to the direction in which the electrode tab protrudes.

### [Advantageous Effects]

According to the embodiments, the positive electrode sheet/separator/negative electrode sheet are unwound at the same time, and then punched at the same time, thereby making it possible to reduce the complexity of the punching and lamination process.

Also, a non-conductive layer is formed at both ends of the positive electrode/negative electrode, thereby making it possible to prevent a phenomenon of short circuits at the side surfaces.

In addition, the cutting member directly contacts the electrode material during the punching process, thereby preventing the electrode material adhering to the cutting member from contaminating electrodes having different polarities.

Further, a marker part is formed on the non-conductive layer, thereby making it possible to accurately set the punching position during the process and increase production yield.

Effects obtainable from the present disclosure are not limited to the effects mentioned above, and additional other effects not mentioned will be clearly understood from the description and the accompanying drawings by those skilled in the art.

### [BRIEF DESCRIPTION OF THE DRAWINGS]

FIG. 1 is a diagram showing an electrode assembly manufacturing apparatus according to an embodiment of the present disclosure;
FIG. 2 is a diagram for explaining a method of manufacturing an electrode assembly according to the present disclosure;
FIG. 3 is a diagram for explaining the process of punching a laminate according to an embodiment of the present disclosure;
FIG. 4 is a cross-sectional view taken along the cutting line A-A' of FIG. 3;
FIG. 5 is a diagram showing a unit cell formed after punching the laminate of FIG. 4; and
FIG. 6 is a diagram showing a conventional method of manufacturing an electrode assembly.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure can be modified in various different ways, and is not limited to the embodiments set forth herein.

Portions that are irrelevant to the description will be omitted to clearly describe the present disclosure, and like reference numerals designate like elements throughout the description.

Further, since the size and thickness of each element shown in the accompanying drawing are arbitrarily illustrated for convenience of explanation, it would be obvious that the present disclosure is not necessarily limited to those illustrated in the drawings. In the drawings, the thickness are exaggerated for clearly expressing several layers and regions. In the drawings, for convenience of explanation, the thicknesses of some layer and regions are exaggerated.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

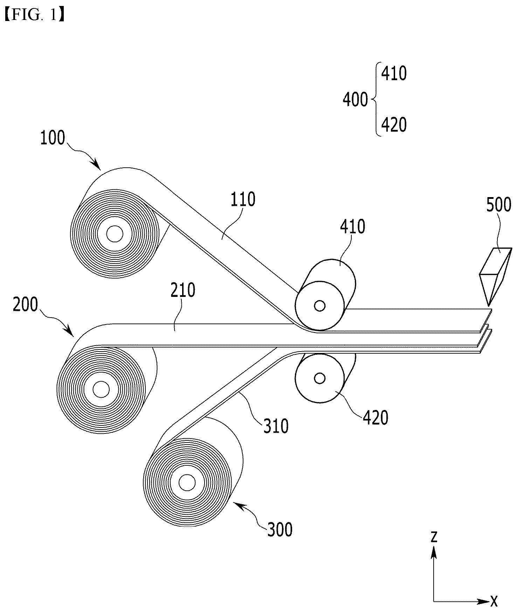

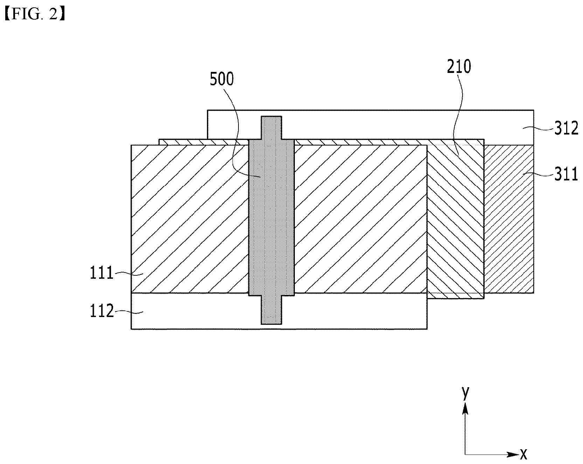

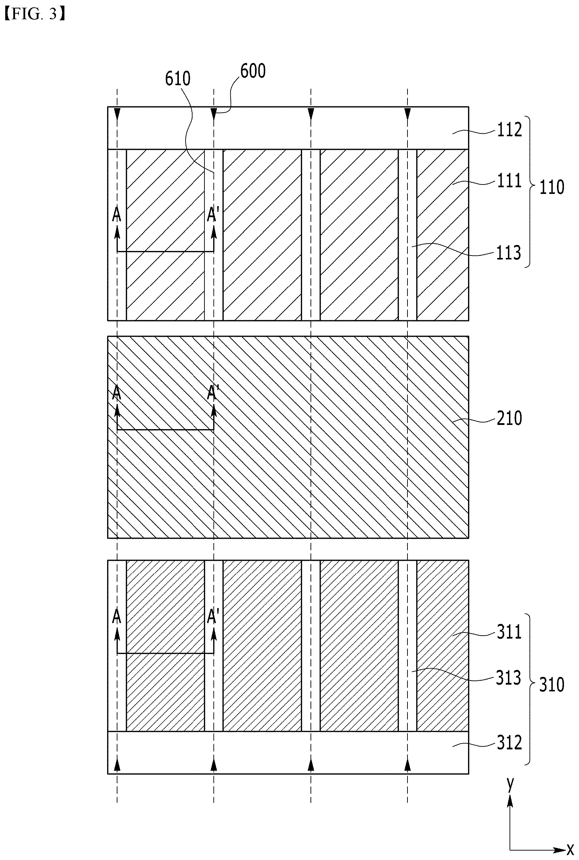

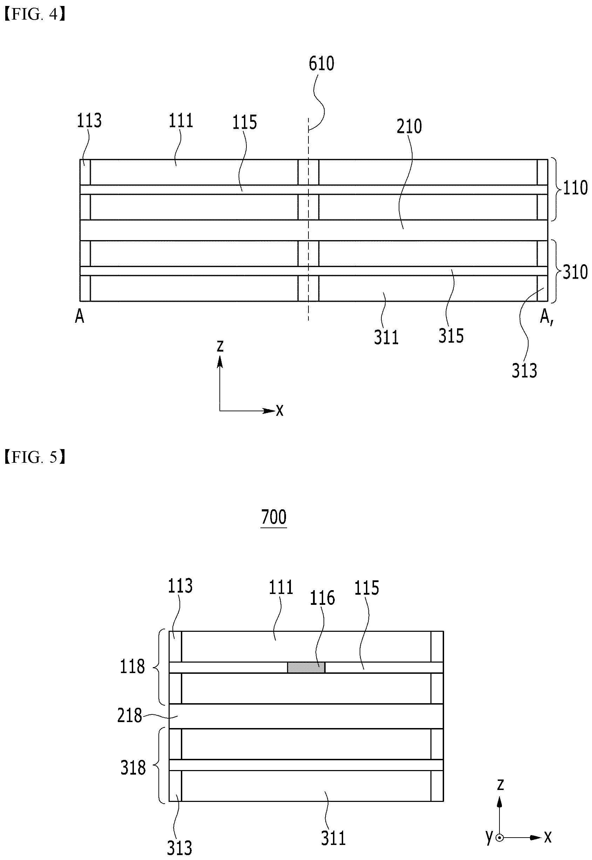

FIG. 1 is a diagram showing an electrode assembly manufacturing apparatus according to an embodiment of the present disclosure. FIG. 2 is a diagram for explaining a method of manufacturing an electrode assembly according to the present disclosure. FIG. 3 is a diagram for explaining the process of punching a laminate according to an embodiment of the present disclosure. FIG. 4 is a cross-sectional view taken along the cutting line A-A' of FIG. 3.

Referring to FIG. 1, the electrode assembly manufacturing apparatus according to the present embodiment includes a plurality of roll members 100, 200 and 300, and includes a transfer member (not shown) that transfers the sheets 110, 210 and 310 unwound from a plurality of roll members 100, 200 and 300, respectively, a pair of guide rolls 400 that guide a plurality of sheets 110, 210 and 310, and a cutting member 500 that punches a plurality of sheets 110, 210 and 310.

A plurality of roll members 100, 200 and 300 include a first winding roll 100 that winds a positive electrode sheet 110, a second winding roll 200 that winds a separator sheet 210, and a third winding roll 300 that winds an negative electrode sheet 310. At this time, the positive electrode sheet 110 may be in a non-punched state, and may be wound around the first winding roll 100 in the form of a long sheet extending in one direction in a state where a positive electrode active material layer and a non-conductive layer are formed on the positive electrode current collector as described later. The separator sheet 210 may also be wound around the second winding roll 200 in a non-punched state. The negative electrode sheet 310 is also in a non-punched state, and may be wound around the third winding roll 300 in the form of a sheet extending long in one direction in a state where an negative electrode active material layer and a non-conductive layer are formed on the negative electrode current collector, as described later.

The transport member may be a conveyor belt unit, and may serve to transport the sheets 110, 210 and 310 in one direction (x-axis direction).

The guide rolls 400 include an upper guide roll 410 and a lower guide roll 420 that are arranged separately on upper and lower parts, and the sheets 110, 210, and 310 can pass between the rolls.

The cutting member 500 may be a punching knife that directly cuts the positive electrode sheet 110, the separator sheet 210, and the negative electrode sheet 310. The cutting member 500 may cut the sheets 110, 210 and 310 in a direction perpendicular to the first direction (x-axis direction) in which the sheets 110, 210 and 310 are transferred.

Below, a method of manufacturing an electrode assembly using the electrode assembly manufacturing apparatus according to the present embodiment will be described.

The positive electrode sheet 110, the separator sheet 210, and the negative electrode sheet 310 are each unwound from the plurality of roll members 100, 200 and 300 and transferred along the first direction (x-axis direction), and then while being unwound, the positive electrode sheet 110, the separator sheet 210, and the negative electrode sheet 310 may be in close contact with each other in a direction perpendicular to the transfer direction (x-axis direction). In other words, the sheets 110, 210 and 310 may be unwound from the plurality of roll members 100, 200 and 300 to be in a laminated state.

The unwound positive electrode sheet 110, separator sheet 210, and negative electrode sheet 310 may form a laminate while passing between a pair of guide rolls 400. The sheets 110, 210 and 310 made in a laminate shape can pass between an upper guide roll 410 and a lower guide roll 420, which are arranged separately on upper and lower parts. The step of passing through the guide rolls 400 to form the laminate may be preferably performed immediately after the step of unwinding the positive electrode sheet 110, the separator sheet 210 and the negative electrode sheet 310 from the plurality of roll members 100, 200 and 300, respectively.

The laminate formed by passing between a pair of guide rolls 420 can still maintain a continuous sheet shape. Further, the sheets 110, 210, and 310, which have been unwound to form a laminated state, can pass between the pair of guide rolls 420 and further closely adhere to each other to forming a laminate. Then, the sheets 110, 210 and 310 may be transferred in the first direction (x-axis direction) and maintained in a laminated state. Then, a lamination process may be performed in which heat and pressure are applied so that the positive electrode sheet 110, the separator sheet 210, and the negative electrode sheet 310 are joined to each other.

FIG. 2 schematically shows portions punched by the cutting member 500 after the plurality of sheets 110, 210 and 310 pass through a pair of guide rolls 400.

Referring to FIGS. 1 and 2, the laminate including the positive electrode sheet 110, the separator sheet 210, and the negative electrode sheet 310 may be punched using a cutting member 500. At this time, the cutting member 500 can directly cut the positive electrode sheet 110, the separator sheet 210, and the negative electrode sheet 310.

A coated part on which the active material layer 111 is formed and an uncoated part 112 that is not coated with an active material may be located on the positive electrode sheet 110 along a direction perpendicular to the traveling direction of the guide roll 400 (y-axis direction). The coated part and the uncoated part 112 may be sequentially arranged in the -y-axis direction. The active material layer 111 may be a positive electrode mixture layer including a positive electrode active material, a binder, and a conductive material.

A coated part in which the active material layer 311 is formed and an uncoated part 312 that is not coated with the active material may be located on the negative electrode sheet 310 along a direction perpendicular to the traveling direction of the guide roll 400 (y-axis direction). The coated part and the uncoated part 312 may be sequentially arranged in the y-axis direction. The active material layer 311 may be an negative electrode mixture layer including an negative electrode active material, a binder and a conductive material. In one example, the active material layer 311 can be formed by coating and drying an negative electrode active material, a binder, and a conductive material in the form of a slurry on a current collector.

In other words, the uncoated parts 112 and 312 formed respectively on the positive electrode sheet 110 and the negative electrode sheet 310 may be arranged in different directions from each other with respect to the coated part. At this time, the tab-shaped protrusions formed respectively on the positive electrode sheet 110 and the negative electrode sheet 310 may be arranged in different directions from each other with respect to the coated part. Here, the tab-shaped protrusion can be used as an electrode tab. In other words, the uncoated parts 112 and 312 can be used as electrode tabs as they are, and as another example, the tab-shaped protrusion may have a shape that allows separate electrode tabs to easily attach thereto.

FIG. 3 shows a state in which the positive electrode sheet 110, the separator sheet 210, and the negative electrode sheet 310, which are overlapped in the vertical direction (z-axis direction in FIG. 1) in the process of punching the laminate, are separated in a plane when viewed along the z-axis direction.

Referring to FIG. 3, when punching the laminate, each of the positive electrode sheet 110 and the negative electrode sheet 310 may be in a state in which the active material and the non-conductive material are alternately coated based on the traveling direction (x-axis direction) of the guide roll 400. The step of alternately coating the active material and the non-conductive material onto each of the positive electrode sheet 110 and the negative electrode sheet 310 may be performed before the step of unwinding the positive electrode sheet 110 and the negative electrode sheet 310 from the roll members 100 and 300. In the step of punching the laminate, the positive electrode sheet 110, the separator sheet 210, and the negative electrode sheet 310 may be punched at the same time. The direction in which the laminate is punched may be a direction perpendicular to the traveling direction (z-axis direction in FIG. 1) of the guide roll 400.

In the present embodiment, because the positive electrode sheet 110, the separator sheet 210, and the negative electrode sheet 310 are punched at the same time, it is possible to solve the problem that the assembly process time becomes longer and the cost increases when manufacturing a stacked type electrode assembly by punching the electrodes and the separator individually and then laminating them as in the past.

If the sheets 110, 210 and 310 are punched at the same time in this way, an electrode material may adhere onto the cutting member 500. While the sheets 110, 210, and 310 travel, the laminate is punched at regular intervals. However, if the laminate is cut in a state where the electrode material adhere onto the cutting member 500, the electrode material may come into contact with an electrode sheet having a polarity different from that of the electrode material adhered onto the cutting member 500. If that is the case, the quality of the electrode may deteriorate and ultimately the life of the battery decreases.

According to the present embodiment, when punching the laminate, the electrode part coated with the non-conductive material is punched. As shown in FIG. 3, the cutting member 500 of FIG. 2 can cut the laminate along the punching position line 610 that crosses the non-conductive layers 113 and 313.

A marker part 600 that guides the punching position of the laminate may be formed on the portion coated with the non-conductive material. The marker part 600 may be formed on the same line as the line on which the non-conductive material is coated during the process of coating the non-conductive material. In other words, as shown in FIG. 3, it is preferable that the marker part 600 is formed substantially on the same line as the punching position line 610.

In one example, when coating an active material and a non-conductive material, the non-conductive material coating device and the marker part forming device can be linked to leave a marker at the central position of the portion where the non-conductive material is coated, thereby forming a marker part 600.

By forming the marker part 600, the punching position of the cutting member 500 can be found more accurately during an automated process, and thereby the effect of improving production yield can be expected. The marker unit 600 according to the present embodiment may perform not only the role of accurately finding the punching position, but also the role of aligning the positive electrode sheet 110, the separator sheet 210 and the negative electrode sheet 310 when unwinding them from a plurality of reel members 100, 200 and 300.

Referring to FIG. 4, the positive electrode sheet 110 may have an active material layer 111 and a non-conductive layer 113 formed on at least one surface of the positive electrode current collector 115, and the negative electrode sheet 310 may have an active material layer 311 and a non-conductive layer 313 formed on at least one surface of the negative electrode current collector 315. As described above, the cutting member 500 of FIG. 2 cuts the laminate in the vertical direction (z-axis direction) along the punching position line 610, so that the non-conductive layer 113 of the positive electrode sheet 110, the separator sheet 210, and the non-conductive layer 313 of the negative electrode sheet 310 are punched at the same time. The left and right widths of the cutting member 500 may correspond to the interval between the punching position lines 610 adjacent to each other.

The non-conductive material forming the non-conductive layer 313 according to the present embodiment preferably includes a polymer material. In one example, PE (polyethylene) series can be used as the polymer material, but is not limited thereto, and any polymer material with high ductility can be used. It is preferable that the non-conductive material according to the present embodiment has greater ductility than ceramics and greater ductility than common metal materials. The non-conductive material may have ductility similar to that of lithium metal having high ductility.

According to the present embodiment, the negative electrode sheet 310 is preferably formed from lithium metal. Carbon-based materials, silicon, lithium metal, and the like are used as negative electrode active materials in lithium-ion batteries, among which lithium metal has the advantage of being able to obtain the highest energy density. When a lithium metal battery is used in this way, due to the high reactivity of lithium metal, the volumetric expansion of the negative electrode during battery charging and discharging, and the surface unevenness phenomenon that occurs during the process of electrodeposition and peeling off of lithium metal from the negative electrode, a stable interface is not formed between the electrolyte and the lithium metal electrode, and a sustained electrolyte decomposition reaction can occur. Such electrolyte side reactions can shorten battery life while rapidly increasing battery resistance.

When a lithium metal battery is used in order to reduce the above problems, it is necessary to always apply strong pressure to the battery cell, and a spring or strong compressor can be used to apply such pressure. In other words, if strong pressure is not applied during charging and discharging, the life of the battery will decrease and so strong pressure may be applied to the battery cell when using a lithium metal battery. However, according to the present embodiment, since the non-conductive layers 113 and 313 are formed using a polymer material having high ductility, the non-conductive layers 113 and 313 do not break even under strong pressure conditions, which may not cause damage to the current collectors 115 and 315. If the non-conductive layers 113 and 313 are made of a material with low ductility such as ceramic, they may break under strong pressure conditions.

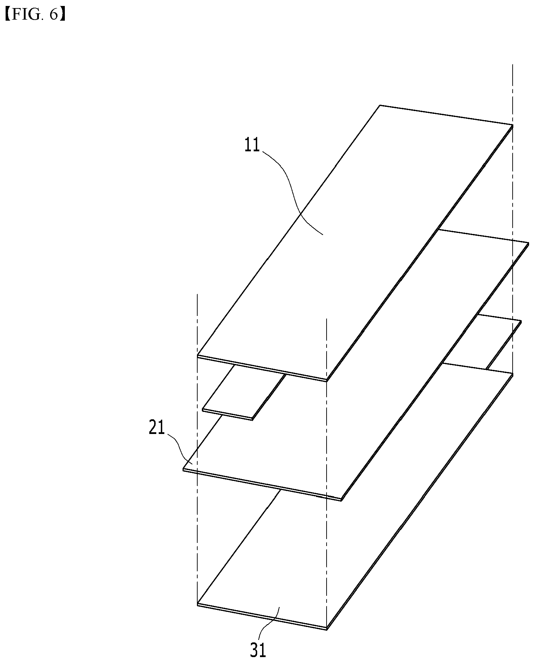

FIG. 5 is a diagram showing a unit cell formed after punching the laminate of FIG. 4. FIG. 6 is a diagram showing a conventional method of manufacturing an electrode assembly.

Referring to FIG. 5, the unit cell 700 according to this embodiment can be formed by the method for manufacturing an electrode assembly described above. The unit cell 700 includes a positive electrode 118, a separator 218, and an negative electrode 318, which are formed after the laminate is punched. At this time, the positive electrode 118 and the negative electrode 318 respectively include active material layers 111 and 311, and non-conductive layers 113 and 313 located on both sides of the active material layers 111 and 311.

According to the present embodiment, the widths of the positive electrode 118, the separator 218, and the negative electrode 318 are substantially equal to each other based on the traveling direction (x-axis direction) of the guide rolls 400 in FIG. 1. This is because, in the method of manufacturing an electrode assembly according to the present embodiment, the positive electrode sheet, the separator, and the negative electrode sheet are punched at the same time. At this time, the traveling direction (x-axis direction) of the guide roll 400 is perpendicular to the direction (y-axis direction) in which the electrode tab 116 of FIG. 5 protrudes, and the widths of the positive electrode 118, separator 218, and negative electrode 318 described above may be substantially equal to each other based on the direction in which the electrode tab 116 protrudes.

In addition, the widths of the positive electrode active material layer 111 and the negative electrode active material layer 311 included respectively in the positive electrode 118 and the negative electrode 318 may be equal to each other based on the traveling direction (x-axis direction) of the guide roll 400 in FIG. 1. Referring to FIG. 6, conventionally, in the case where the positive electrode 11 and the negative electrode 31 are individually punched and then laminated, in order to prevent a short circuit phenomenon due to contact between the positive electrode and the negative electrode, the separator 21 is cut larger than the negative electrode 31 and the positive electrode 11 during the punching process. However, in the present embodiment, even if the widths of the positive electrode active material layer 111 and the negative electrode active material layer 311, which correspond substantially to the width of the electrode, are equal to each other, the short circuit phenomenon can be prevented because the non-conductive layers 113 and 313 are formed.

In the present embodiment, when punching is performed in the laminated state, a phenomenon may occur where at least one of the plurality of sheets is pushed, but the non-conductive layers 113 and 313 can cover the portion where the positive electrode 118 and the negative electrode 318 can come into contact with each other, thereby preventing a short circuit phenomenon.

Referring again to FIG. 1, the unit cells 700 of FIG. 5 formed after simultaneously punching the positive electrode sheet 110, the separator sheet 210, and the negative electrode sheet 310 in the laminated state can be transported and laminated by a pick & place method to form an electrode assembly. As another example, the unit cells 700 formed by punching a laminate may be loaded and stored in a storage box such as a magazine. Thereafter, the unit cells 700 stored in the storage box can be transported and laminated again by a pick and place method to form an electrode assembly.

Subsequently, a battery cell can be manufactured by embedding an electrode assembly including at least one unit cell 700 in a battery case together with an electrolyte.

For convenience of explanation, the above explanation assumes that three layers of negative electrode/separation membrane/positive electrode are unwound, and operated at the same time, but when forming a laminate, electrodes of different polarities must be separated by a separator and insulated from each other, so that one end of the basic unit for forming the laminate may be finished with a separator. In one example, 4 layers of positive electrode/separator/negative electrode/separator are used as a basic unit, or 6 layers of positive electrode/separator/negative electrode/separator/positive electrode/separator, or 6 layers of negative electrode/separator/positive electrode/separator/negative electrode/separator may be used as basic unit, and higher layers can also be operated simultaneously by using as basic units.

Specifically, when 4 layers of positive electrode/separator/negative electrode/separator are used as the basic unit, a winding roll that winds the separator sheet is arranged below the third winding roll 300 in FIG. 1, and when unwinding together with the positive electrode sheet 110,the separator sheet 210 and the negative electrode sheet 310, and forming the laminate according to the present embodiment described above, one end of the basic unit may be disposed so as to be a separator.

Although the invention has been described in detail above with reference to preferred embodiments thereof, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Reference Numerals]

100, 200, 300: winding roll
110: positive electrode sheet
111, 311: active material layer
112, 312: uncoated part
113, 313: non-conductive layer
115, 315: current collector
118: positive electrode
210: separator sheet
218: separator
310: negative electrode sheet
318: negative electrode
400: guide roll
500: cutting member
600: marker part
610: punching position line

## Claims

1. A method of manufacturing an electrode assembly, the method comprising the steps of:
unwinding a positive electrode sheet, a separator sheet and an negative electrode sheet from a plurality of roll members, respectively,
forming a laminate while passing the unwound positive electrode sheet, separator sheet, and negative electrode sheet between a pair of guide rolls, and
punching the laminate including the positive electrode sheet, the separator sheet, and the negative electrode sheet,
wherein each of the positive electrode sheet and the negative electrode sheet is alternately coated with an active material and a non-conductive material based on the traveling direction of the guide rolls, and
wherein the punching the laminate punches a portion coated with the non-conductive material.

2. The method of manufacturing an electrode assembly according to claim 1, wherein:
the punching the laminate punches the positive electrode sheet, the separator sheet, and the negative electrode sheet at the same time.

3. The method of manufacturing an electrode assembly according to claim 1, wherein:
the negative electrode sheet is formed to include lithium metal.

4. The method of manufacturing an electrode assembly according to claim 1, wherein:
a marker part for guiding the punching position of the laminate is formed in a portion coated with the non-conductive material.

5. The method of manufacturing an electrode assembly according to claim 4, wherein:
the marker part is formed on the same line as the line on which the non-conductive material is coated during the process of coating the non-conductive material.

6. The method of manufacturing an electrode assembly according to claim 1, wherein:
the non-conductive material includes a polymer material.

7. The method of manufacturing an electrode assembly according to claim 6, wherein:
the polymer material used is PE (polyethylene) series.

8. The method of manufacturing an electrode assembly according to claim 1, wherein:
the alternately coating the active material and the non-conductive material onto each of the positive electrode sheet and the negative electrode sheet is performed before unwinding a positive electrode sheet and an negative electrode sheet from the roll members.

9. The method of manufacturing an electrode assembly according to claim 1, wherein:
the passing through the guide roll to form the laminate is performed immediately after the unwinding the positive electrode sheet, the separator sheet, and the negative electrode sheet from the plurality of roll members, respectively.

10. The method of manufacturing an electrode assembly according to claim 1, wherein:
the punching the laminate uses a cutting member, wherein the non-conductive material is formed from a material having ductility to ensure that the electrode material does not adhere to the cutting member.

11. The method of manufacturing an electrode assembly according to claim 10, wherein:
the cutting member directly cuts the positive electrode sheet, the separator, and the negative electrode sheet.

12. The method of manufacturing an electrode assembly according to claim 10, wherein:
the direction in which the laminate is punched is perpendicular to the traveling direction of the guide rolls.

13. An electrode assembly in which:
a positive electrode, a separator, and an negative electrode are laminated in a preset direction,
the positive electrode and the negative electrode each include an active material layer and a non-conductive layer located on both sides of the active material layer, and
the non-conductive material includes a polymer material.

14. The electrode assembly according to claim 13, wherein:
the widths of each of the positive electrode, the separator, and the negative electrode are equal to each other based on a direction that is perpendicular to a direction in which the electrode tab of the positive electrode or the negative electrode protrudes and is perpendicular to the preset direction.

15. The electrode assembly according to claim 14, wherein:
the widths of the positive electrode active material layer and the negative electrode active material layer included respectively in the positive electrode and the negative electrode are equal to each other based on a direction perpendicular to the direction in which the electrode tab protrudes.
